# FASCICULE DE BREVET EUROPEEN

(11) **EP 0 659 346 B1**
(45) Date de publication et mention de la délivrance du brevet: **08.10.2003**
(21) Numéro de dépôt: 94402900.8
(22) Date de dépôt: 16.12.1994
(51) Int. Cl.: A23B 4/027, A23B 4/08, A23B 4/10, A23B 4/26

(54) **Procédé de traitement des carcasses de volailles pour en augmenter la durée de conservation et maîtriser le developpement des Salmonella**
Behandlungsverfahren von Geflügelkörpern zur Verlängerung der Haltbarkeit und Einschränkung des Salmonellen-Wachstums
Process for treating poultry carcasses for extending their shelf life and controlling Salmonella growth

(30) Priorité: 22.12.1993 US 171795
(43) Date de publication de la demande: 28.06.1995
(73) Titulaire: RHODIA INC., Cranbury, New Jersey 08512 (US)
(72) Inventeur: Bender, Frederic G., Mc Murray, Pennsylvania (US); Elfstrum, James T., Granbury, New Jersey (US)
(74) Mandataire: Seugnet, Jean Louis

(56) Documents cités:
- EP-A- 0 516 878
- GB-A- 935 413
- US-A- 5 069 922

## Description

La présente invention concerne l'amélioration d'un procédé permettant de réduire le taux et de retarder le développement des bactéries, telles que les Salmonella, pendant la préparation des volailles et sur les volailles crues sans en affecter les qualités organoleptiques et, en conséquence, d'augmenter la durée de conservation des volailles.

Après l'abattage, les volailles sont ébouillantées pour faciliter le plumage, plumées, lavées, éviscérées et réfrigérées avant d'être emballées. Ces traitements sont surveillés afin d'éviter toute modification des caractéristiques de l'aspect des volailles qui les rendrait invendable.

Après l'éviscération, les volailles présentent des taux importants de Salmonella à la surface des carcasses. Une grande partie de la contamination des carcasses par les Salmonella peut être supprimée par un lavage à l'eau. Alors que les Salmonella peuvent être tuées facilement par la chaleur, pendant la cuisson, par exemple, des unités de bactéries formant une colonie peuvent se fixer et/ou résider dans les surfaces régulières et irrégulières de la peau et, par la suite, contaminer les surfaces de travail, les mains et les ustensiles. Ce transfert de la bactérie ou contamination croisée entre les carcasses infectées et les surfaces insuffisamment chauffées pour en provoquer la destruction thermique peut altérer les aliments et entraîner la maladie.

Des recherches approfondies ont été effectuées dans ce domaine pour trouver un système économique permettant de réduire la contamination des carcasses de volailles par les Salmonella sans en affecter les qualités organoleptiques. Les plumes des volailles abritent des quantités importantes de Salmonella susceptibles de contaminer la carcasse pendant l'ébouillantage et le plumage. Une éviscération mal effectuée peut être aussi une source de contamination. L'utilisation d'acides, tels que l'acide lactique ou l'acide acétique, à des concentrations suffisantes pour maîtriser le développement bactérien affecte les qualités organoleptiques des volailles. Aux concentrations suffisantes pour éviter l'altération organoleptique des volailles, les effets bactériostatiques sont réduits. Le système de traitement doit être économique, facile à mettre en oeuvre, compatible avec la fabrication des aliments et ne pas modifier les propriétés organoleptiques des volailles. Tout changement dans l'aspect des volailles les rendrait invendables.

Il a été signalé que l'on peut accroître le taux de mortalité des Salmonella par voie thermique en amenant le pH de l'eau d'ébouillantage à pH 9,0 ± 0,2. Les produits, tels que l'hydroxyde de sodium, l'hydroxyde de potassium, le carbonate de sodium et le phosphate trisodique seraient des agents efficaces pour ajuster le pH en vue d'augmenter le taux de mortalité de la bactérie par voie thermique. Le phosphate trisodique serait le moins efficace pour augmenter le taux de mortalité. L'hydroxyde de sodium et l'hydroxyde de potassium, s'ils sont des bactériostatiques efficaces, peuvent avoir un effet défavorable sur la surface des carcasses. L'acide propionique et l'aldéhyde glutarique que l'on a essayé également comme agents de traitement auraient éventuellement un effet défavorable sur le plumage. Voir "The Effect of pH Adjustment on the Microbiology of Chicken Scald-tank Water With Particular Reference to the Death Rate of Salmonella", T.J. Humphrey et al., Journal of Applied Bacteriology, 1981,51, pp. 517-527.

T.J. Humphrey et al. ont étudié également l'effet du pH de l'eau d'ébouillantage sur les Salmonella se trouvant sur la peau de poulets. Voir "The Influence of Scald Water pH on the Death Rates of Salmonella typhimurium and Other Bacteria Attached to Chicken Skin", Journal of Applied Bacteriology, 1984, 57 (2), pages 355-359. L'eau d'ébouillantage ajustée à pH 9 ± 0,2 comme indiqué dans l'article de 1981 peut aider à réduire la contamination externe et interne des carcasses par les Salmonella.

Les résultats publiés dans le premier article sont fondés sur des essais effectués sur des échantillons d'eau d'ébouillantage prélevés dans la cuve d'ébouillantage. L'article ne met pas en évidence l'effet des substances utilisées sur les colonies bactériennes à la surface des volailles ni l'effet organoleptique produit sur la viande ou la peau des volailles.

Le second article enseigne que l'ajustement du pH de l'eau d'ébouillantage à 9 ± 0,2 peut être utilisé pour améliorer l'hygiène des carcasses de poulets pendant le plumage et réduire ainsi le transfert de bactéries à partir de la cuve d'ébouillantage.

Ces documents se limitent à la cuve d'ébouillantage, mettent en oeuvre des pH relativement faibles et de faibles concentrations de produits d'ajustement du pH et ne mettent en évidence aucun effet à long terme de ces produits sur la surface des volailles étant donné que la solution d'eau d'ébouillantage et tous les produits qu'elle contient sont éliminés par lavage après le plumage.

Humphrey et al. reconnaissent que le plumage et l'éviscération qui suivent sont sources d'autres contaminations. Les améliorations de l'hygiène de l'ébouillantage qu'ils préconisent dans leur article de 1984 ainsi que dans le précédent [1981] concourent à réduire le taux de développement des germes pathogènes à la surface des carcasses pendant le plumage, mais n'ont pas d'effet mesurable sur la durée de conservation ou sur la sécurité des carcasses en raison des nouvelles contaminations qui interviennent durant l'éviscération. Les organismes responsables de l'altération de la viande de ce type sont ajoutés au cours du stockage au froid ou durant les étapes suivantes du traitement (Humphrey et al., 1984, page 359). Humphrey et al. n'enseignent pas comment on peut diminuer les risques de salmonellose en réduisant l'incidence et les populations de Salmonella. Humphrey et al., 1984, ne signalent pas non plus les effets que leur traitement peut avoir sur les carcasses de volailles et dont la plupart sont indésirables.

On a effectué des tentatives de pasteurisation de la viande de volaille par traitement avec une solution contenant des agents, tels que l'acide lactique, l'acide acétique, le carbonate de sodium, le borate de sodium, le chlorure de sodium, l'hydroxyde de potassium, le chlore et l'EDTA. Tous les traitements, à l'exception du borate de sodium, du chlorure de sodium et du carbonate de sodium, réduisent l'acceptabilité visuelle de la viande. Le chlore ne parvient pas à détruire la bactérie à la surface des volailles, mais on s'attendrait plutôt à ce qu'il maîtrise les Salmonella dans l'eau. Voir Chemical Pasteurization of Poultry Meat, J.S. Teotia, Dissertation Astracts Int., 1974, 34 (a), 4142.

Dans les documents suivants, on traite différents produits camés en vue de retenir leur humidité, leur texture et leur tendreté. Le brevet US - A 3 782 975 de Zyss, publié le 1er janvier 1974, enseigne de traiter au polyphosphate les premières coupes de viande fraîche à l'aide d'une solution ayant un pH de 6 à 8, exempte de sodium et contenant environ de 1,0 à 20 % en poids de polyphosphate hydrosoluble pouvant comprendre l'orthophosphate.

Le brevet US - A 3 775 543 de Zyss, publié le 27 novembre 1973, met en oeuvre de 0,2 à 20 % en poids d'une solution de traitement à base de phosphate (qui peut être de l'orthophosphate) par rapport à la préparation de viande traitée. Le phosphate est utilisé comme liant. On a observé que le pH alcalin réduit la durée de conservation. Les Salmonella sont tuées par la cuisson, non pas par le phosphate.

Dans le brevet US - A 3 493 392 de Swartz, publié le 3 février 1970, on injecte dans du thon une solution de traitement à base de phosphate, y compris l'orthophosphate, pour améliorer le rendement de viande légère que l'on recherche, pour améliorer l'odeur (odeur de poisson moins forte) et pour rendre la viande plus tendre et moins sèche. Les injections profondes de solution dans la viande ou le poisson ne constituent pas un traitement de surface. Swartz met en oeuvre dans l'exemple IV de l'orthophosphate mono et dialcalin et signale des résultats médiocres de rétention en poids par rapport aux polyphosphates. Dans le brevet US - A 3 620 767 de Swartz, publié le 16 novembre 1971, on injecte du sel et du phosphate, y compris de l'orthophosphate, dans des bonites, mais aucun exemple n'est donné. Voir ausssi le brevet canadien CA - A 847 280 de Swartz, publié le 21 juillet 1970. Ces brevets mettent en oeuvre des polyphosphates pour leur propriétés qui permettent de fixer l'eau.

Le brevet US - A 2 770 548 décrit les propriétés anti-coagulantes des orthophosphates trialcalins.

On a trouvé aussi que le phosphate trisodique permet d'inhiber le développement des moisissures bleues sur les coupures et les meurtrissures des fruits si l'on traite les surfaces abîmées avec une solution de phosphate trisodique (Brevet us 1 744 310).

Kohl et al., brevet US - A 3 681 091, publié le 1er août 1972, enseigne de traiter les aliments, y compris les filets de poisson, avec une solution à 10 % de polyphosphates à chaîne de longueur moyenne.

Freund et al., brevet US - A 2 957 770, enseigne d'améliorer les propriétés de la viande avec une composition qui peut comprendre des orthophosphates minéraux, tels que l'hydrogénoorthophosphate disodique. Ils mettent en oeuvre de faibles concentrations de phosphate.

Cheng, brevet US - A 4 683 139, publié le 28 juillet 1987, enseigne un procédé concernant la viande rouge préemballée, vendue au détail, dans lequel la durée de conservation de la viande est prolongée par un traitement avec une solution aqueuse de sel alcalin ou certains composés à base de phosphate, un composé réducteur, tel que l'acide ascorbique et un agent de séquestrant ou chélatant, tel que l'acide citrique. Le phosphate peut être un orthophosphate, un pyrophosphate, un triphosphate et un hexaméthaphosphate et varie selon la façon dont la solution tampon est appliquée à la viande, le pH étant inférieur à la neutralité.

Szczesniak et al., brevet US - A 4 075 357, publié le 21 février 1978, enseigne une combinaison de sel avec un sel secondaire choisi dans le groupe comprenant les sels alcalins d'acides organiques, l'orthophosphate trisodique, le polyphosphate, le métaphosphate et l'ultraphosphate. On préfère les citrates combinés avec le chlorure de sodium. Ces mélanges sont utilisés pour maîtriser l'activité de l'eau dans les aliments cuits dans une faible quantité d'eau et ayant un pH neutre.

Le brevet US - A 3 705 040 de Bynagte, publié le 5 décembre 1972, décrit l'utilisation d'une solution aqueuse contenant de 2 à 3 % de pyrophosphates acides et de 2 à 15 % de phosphates de sodium, y compris l'orthophosphate de sodium, pour imprégner des crevettes pendant au moins deux minutes et les cuire ensuite pendant trois minutes, les refroidir et les décortiquer. Le procédé améliore la quantité de chair de crevettes retirée de la carapace en réduisant la résistance des parties situées sous la peau de la crevette. Là où il est utilisé dans l'exemple IV, l'orthophosphate est mis en oeuvre à raison de 2 %.

Les brevets précités dans lesquels on imprègne ou traite la viande ou le poisson avec des phosphates mettent généralement en oeuvre des aiguilles pour injecter ou mélanger dans les préparations de viande une solution de phosphate destinée à fixer l'eau et à améliorer la texture du produit. Pour ce faire, on met en oeuvre des formules à pH neutre. Ces brevets n'enseignent pas la présente invention qui consiste à traiter la surface de volailles qui viennent d'être abattues avec un orthophosphate tricalcalin de pH 11,5 ou plus, afin d'éliminer, réduire ou retarder la contamination ou le développement bactérien sur les volailles.

Le brevet US - A 4 592 892 d'Ueno et al., publié le 3 juin 1986, enseigne que l'on peut renforcer l'éthanol utiliser pour stériliser des aliments et des machines en mettant en oeuvre une solution aqueuse de carbonate alcalin pouvant contenir également un phosphate trialcalin. On utilise l'orthophosphate trialcalin ainsi que le carbonate de sodium pour traiter un bouillon afin de réduire E. coli du Tableau 1. Ledit brevet ne montre pas que le phosphate trisodique peut à lui seul éliminer, réduire ou retarder la contamination bactérienne sur les volailles. L'orthophosphate est utilisé uniquement en combinaison avec l'éthanol qui, au Japon, est un désinfectant populaire utilisé pour les machines et les aliments.

Thomson et al. "Phosphate and Heat Treatments to Control Salmonella and Reduce Spoilage and Rancidity on Broiler Carcasses", Poultry Science, 1979, pages 139-143, traite les volailles avec 6 % de kéna phosphate qui est un mélange de polyphosphates, constitué de 90 % de tripolyphosphate de sodium et de 10 % d'héxaméthaphosphate de sodium. Les phosphates n'affectent pas de façon significative ou immanquable la survie des Salmonella ou la totalité du développement bactérien.

Il est connu que la durée de conservation des carcasses de poulets peut être accrue de 1 à 2 jours en réfrigérant les volailles dans une solution contenant 6 % de tripolyphosphate de sodium et 0,7 % de pyrophosphate trisodique (Kena commercialisé par Rhône-Poulenc, Inc.). Voir The Antimicrobial Effect Of Phosphate With Particular Référence to Food Products, L.L. Hargreaves et al., The British Food Manufacturing Industries Research Association, Scientific and Technical Surveys, n° 76, avril 1972, pages 1-20, page 12. Nombreux sont les brevets et les articles qui suggèrent d'utiliser les polyphosphates pour conserver les produits à base de viande et de poisson.

Par ailleurs, on signale aussi dans l'article de Hargreaves, page 7, que G. Pacheco et V.M. Dias, dans un article intitulé Bacteriolytic Action of Phosphates, Mems Institute, Oswaldo Cruz, 52 (2), pages 405-414, traitent de l'action bactériolytique de solutions d'orthophosphates monosodiques, disodiques, trisodiques et dipotassiques sur des cellules mortes et vivantes de Salmonella typhosa, Escherichia coli et Staphylococcus aureus. Il est dit que le phosphate trisodique dodécahydraté possède l'action lytique la plus importante. Ce document ne mentionne pas le traitement des volailles.

Le brevet britannique GB - A 935 413 enseigne de traiter les volailles crues dans un bac de réfrigération avec un polyphosphate non cyclique. Il est dit que ce procédé permet d'accroître la conservation des volailles en réduisant les exsudats et, par conséquent, le développement des bactéries.

Le brevet US - A 5 264 229 suggère d'augmenter la durée de conservation des volailles ayant subi un traitement en vue de leur commercialisation en mettant en oeuvre un peroxyde d'hydrogène spécifique et un tensioactif dans l'eau utilisée pour les réfrigérer.

Les brevets US - A 5 069 922 et 5 143 206 et EP-A-0 516 878 se rapportent à un procédé de lavage de carcasses de volailles qui élimine ou réduit la contamination existante par les Salmonella et retarde toute autre contamination ou développement ultérieur sans affecter les qualités organoleptiques des carcasses de volailles. Si la technologie a fait des progrès significatifs dans ce domaine, on peut encore apporter des améliorations en réduisant le nombre total de bactéries aérobies et, par conséquent, augmenter la durée de conservation des volailles.

Selon la présente invention, on propose un procédé de traitement des carcasses de volailles en vue de réduire le nombre total de bactéries et, par conséquent, augmenter la durée de conservation (c'est-à-dire la durée de conservation commerciale habituelle). Le procédé selon l'invention n'interfère aucunement avec le goût ou l'aspect du produit final. L'augmentation de la durée de conservation peut être comprise entre environ un jour et environ quinze jours.

On a trouvé que, pendant le traitement des volailles et avant de les réfrigérer, on peut ajouter environ 4 % ou plus, de préférence 8 % ou plus, d'orthophosphate trialcalin à l'eau de traitement afin d'amener la solution de traitement à un pH supérieur à 11,5 pour éliminer, réduire ou retarder la contamination et/ou le développement des bactéries sur les volailles.

On recommande de mettre en oeuvre le traitement à base d'orthophosphate trialcalin immédiatement après l'ébouillantage, que ce soit avant ou après le plumage ou pendant le lavage des volailles précédant l'éviscération ou, de préférence, pendant le lavage intérieur/ extérieur suivant l'éviscération. Ces traitements sont effectués avec une solution tiède ou chaude, la solution étant recyclée après avoir été filtrée pour économiser le phosphate.On a maintenant trouvé de façon inattendue que le traitement des carcasses avant la réfrigération réduit considérablement le nombre total de bactéries et accroît la durée de conservation des volailles.

Le procédé comprend le traitement des volailles à une température inférieure à celle qui affecterait les qualités organoleptiques des volailles et qui, normalement, est inférieure à 65°C, de préférence, inférieure à 45°C. Les volailles réfrigérées sont traitées à une température inférieure à environ 27°C. La solution de traitement contenant des orthophosphates trialcalins, ledit orthophosphate étant présent en une quantité suffisante et lesdites volailles étant traitées pendant une durée suffisante pour éliminer, réduire ou retarder la contamination bactérienne des volailles et ledit orthophosphate étant présent en des quantités insuffisantes pour affecter de manière substantielle les qualités organoleptiques des volailles. Lesdites solutions de traitement ont un pH supérieur à 11,5.

Il est possible, mais non pas nécessaire, de traiter les volailles, y compris les volailles éviscérées et plumées, avec un mélange constitué en majeure partie d'orthophosphate trialcalin et d'une partie correspondante moindre de produit basique, ledit mélange étant présent en une quantité suffisante et lesdites volailles étant traitées pendant une durée suffisante pour éliminer, réduire ou retarder la contamination et/ou le développement des bactéries sur les volailles. Le produit basique est mis en oeuvre dans le mélange en quantités insuffisantes pour affecter de manière substantielle les qualités organoleptiques des volailles. La solution de traitement a un pH supérieur à 11,5. L'orthophosphate trialcalin est toujours présent seul ou en quantité très importante dans la solution de traitement à condition que ladite solution ne contienne jamais ni alcool ni acide ascorbique. La durée du traitement est de préférence supérieure à environ 5 minutes si l'on met en oeuvre une application par immersion bien que l'on ait observé l'efficacité de durées beaucoup plus courtes. On recommande d'utiliser les orthophosphates trialcalins seuls. Dans certains cas, on utilise l'orthophosphate à partir de 4 % ou plus avant de réfrigérer les volailles.

On a découvert en particulier que les volailles peuvent être traitées avec une solution aqueuse contenant une quantité d'orthophosphate allant d'environ 4 % à la saturation. La quantité efficace que l'on met en oeuvre de préférence est comprise entre environ 4 % et environ 12 %, la quantité que l'on préfère le plus étant d'environ 8 % ou plus d'orthophosphate trisodique ou tripotassique dodécahydraté, ou une quantité équivalente de composé anhydre. On a trouvé que le traitement avec l'orthophosphate trisodique ou tripotassique présente, pour l'essentiel, la même efficacité que l'hydroxyde de sodium ou le mélange acide phosphorique/ hydroxyde de sodium, mais sans les effets défavorables sur la viande ou la peau qui accompagnent l'utilisation de l'hydroxyde de sodium ou du mélange acide phosphorique/hydroxyde de sodium.
En mettant en oeuvre le présent procédé, on peut laver les carcasses de volailles de façon économique et simple avec des produits de qualité alimentaire pour réduire le nombre de bactéries sans en affecter les qualités organoleptiques. De plus, on peut augmenter la durée de conservation du produit final de un à quinze jours environ.

Le phosphate trialcalin est un sel d'orthophosphate de formule R₃PO₄, la formule du sel de sodium étant Na₃PO₄ et la formule des composés tripotassiques étant équivalente. R est un métal alcalin de sodium ou de potassium. Le phosphate trisodique contient au minimum 41,5 % de P₂O₅ et a un pH caractéristique de l'ordre de 11,8 en solution à 1 %.

Le phosphate trisodique est disponible également sous forme de dodécahydrate de formule :

Na₃PO₄. 12 H₂O.

Le dodécahydrate est commercialisé sous une forme de qualité technique de formule :

5(Na₃PO₄. 12 H₂O) NaOH

ou sous une forme de qualité alimentaire de formule :

4(Na₃PO₄. 12 H₂O) NaOH.

Les deux formes ont un pH caractéristique de 11,8 en solution à 1 %. On utilise de préférence le phosphate trisodique dodécahydraté (l'une ou l'autre des deux formes). Le terme phosphate trisodique, tel qu'il est employé dans le présent document, comprend aussi le phosphate tripotassique ainsi que toutes les formes de ces composés. Les produits de qualité alimentaire sont destinés à être utilisés à des fins alimentaires.

La présente invention peut s'appliquer à tous les types de volailles, à savoir poulets, dindes, oies, chapons, poules de Comouailles (Cornish hens), pigeonneaux, canards, pintades et faisans. Par volaille ou carcasse, on entend les oiseaux en entier aussi bien qu'en morceaux.

L'application d'une solution aqueuse d'orthophosphate trialcalin dont le pH est supérieur à 11,5 se fait avant la réfrigération des carcasses. On préfère utiliser la solution d'orthophosphate de façon à ce qu'elle puisse être récupérée après le traitement des volailles. La solution récupérée est filtrée dans un second temps afin d'éliminer les insolubles et on y ajoute de l'eau et de l'orthophosphate alcalin pour en maintenir la concentration à un niveau permettant d'éliminer, réduire ou retarder la contamination microbienne des volailles. Les volailles peuvent être mises au contact de la solution de traitement par immersion dans une cuve ou par pulvérisation à l'intérieur et à l'extérieur des volailles.

Il est possible d'utiliser une cuve que les volailles traversent suspendues à des chaînes de transport ou une pulvérisation par des buses pendant une durée allant de quelques secondes à quelques minutes. Après le contact avec les volailles, il reste encore des résidus de solution de traitement sur les carcasses et cette solution résiduelle continue d'être efficace pour éliminer, réduire ou retarder la contamination et/ou le développement bactérien.

Si le traitement peut être effectué à différents niveaux du procédé de traitement des volailles, on préfère cependant certains niveaux où il est possible de réduire les quantités de solution de traitement mises en oeuvre ainsi que la durée de traitement au minimum efficace pour éliminer, réduire ou retarder, comme on le souhaite, le développement bactériologique et/ou la contamination des volailles. Après l'ébouillantage, pendant le plumage, on a trouvé qu'on peut traiter les volailles dans une cuve pendant un minimum de quelques secondes à une température de l'ordre de 20 à 60°C avant de les flamber. Cela contribue à réduire la contamination bactérienne. Au cours de l'étape suivante qui précède l'éviscération, on élimine la solution de traitement. Bien qu'il soit possible de procéder à un traitement à l'orthophosphate pendant le lavage, les importantes quantités d'eau utilisées et les règlements relatifs au recyclage de l'eau de lavage excluent tout traitement économique. Cependant, il est possible de procéder à un traitement après l'éviscération, en utilisant de préférence un système de pulvérisation de la solution de trempage ou un système de trempage à une température comprise entre 20 et 45°C. Il est possible de pulvériser la solution de traitement aussi bien à l'extérieur qu'à l'intérieur des volailles éviscérées ou de plonger la carcasse entière dans un bain de solution de traitement Le traitement peut durer quelques secondes ou plus. Après le traitement, les carcasses sont rincées à l'eau avant la réfrigération. On récupère ensuite la solution de traitement et on la recycle, les matières solides étant éliminées par filtration. On rajoute de l'eau et du phosphate pour maintenir la concentration en orthophosphate.

On peut procéder à des traitements ultérieurs après la réfrigération, lors du découpage et avant l'emballage des volailles, soit par pulvérisation, soit par immersion.

On a également trouvé que, partout, un traitement allant d'une seconde à deux heures est efficace pour éliminer, réduire ou retarder la contamination bactérienne, notamment la contamination des volailles par les Salmonella. La durée ne doit être que la quantité de temps nécessaire pour obtenir le résultat recherché et peut être facilement déterminée en fonction du point particulier du procédé où le traitement est mis en oeuvre. Lorsque le traitement est mis en oeuvre avant la réfrigération, la durée de conservation du produit final peut être accrue d'une durée approximative de un à quinze jours, une augmentation de l'ordre de trois à cinq jours étant caractéristique.

Le matériel nécessaire pour le recyclage et l'élimination des matières solides est généralement disponible chez les fabricants d'appareils de marinage de la viande. En règle générale, on peut utiliser un filtre rotatif fabriqué par Townsend à Des Moines, lowa, pour éliminer les particules les plus importantes alors que l'on peut utiliser un système de tamisage, vendu également par Townsend, pour les particules les plus petites. L'appareillage doit être en acier inoxydable, en plastique ou tout autre matériau résistant à l'action corrosive de l'orthophosphate trialcalin et pouvant être utilisé dans le traitement des produits alimentaires.

Nous préférons employer des solutions d'orthophosphate saturées qui sont extrêmement efficaces pour éliminer, réduire ou retarder la contamination bactérienne. Il est possible d'utiliser des solutions saturées jusqu'à 40 %, mais, habituellement, les solutions contenant environ 4 %, de préférence environ 8 % ou 10 % ou plus d'orthophosphate trisodique sont efficaces. Le phosphate peut être combiné éventuellement avec d'autres produits à condition que l'on n'utilise ni alcool (éthanol ou autres similaires) ni agents réducteurs, tel que l'acide ascorbique. En d'autres termes, la solution de traitement ne contient pas d'alcool. Nous n'utilisons aucun agent antibactérien susceptible d'affecter les qualités organoleptiques des volailles, telles que les fortes concentrations d'hydroxyde de sodium ou de tout autre alcali ou alcool âpres au goût. Nous préférons utiliser le phosphate trialcalin seul pour traiter les carcasses. On peut utiliser des dispersions d'orthophosphate, mais il apparaît qu'elles apportent peu d'avantages par rapport à l'utilisation d'une solution pour traiter les carcasses.

Là où, en plus, on traite les poulets juste avant de les emballer, il est possible de les traiter avec de l'orthophosphate associé à d'autres produits à condition qu'il n'y ait pas d'alcool. Lorsque l'on procède à un traitement avant ou après l'éviscération, mais avant le découpage, nous préférons utiliser l'orthophosphate trialcalin seul ou, du moins, à condition que l'on n'utilise pas d'alcool.

Lorsque nous pulvérisons la solution de traitement sur les volailles, nous utilisons une pression comprise entre 140 et 1050 KPa permettant d'obtenir une projection suffisamment forte de particules de taille moyenne à l'intérieur et à l'extérieur des volailles pour que celles-ci soient bien nettoyées et que leur aspect et leur goût n'en soient pas affectés.

Lorsque le traitement des volailles intervient après le plumage et l'éviscération, on lave les carcasses avec de l'eau ou toute autre solution de nettoyage appropriée. Pour faciliter le lavage, on peut agiter, utiliser les ultra-sons (sonification) ou tout autre moyen mécanique. De préférence, on traite les carcasses avec une solution de traitement contenant entre environ 4 % et environ 12 %, plus particulièrement entre environ 6 % et environ 12 % et encore plus particulièrement entre environ 8 % et environ 12 % en poids d'orthophosphate trialcalin par rapport au poids de la solution.

On peut plonger les carcasses dans la solution de traitement. Dans ce cas, il est préférable d'agiter la solution afin d'assurer une bonne circulation de la solution de traitement sur toutes les surfaces et dans toutes les crevasses de la carcasse. La solution de traitement peut être appliquée aussi à l'aide de pulvérisateurs mécaniques, de préférence sous une forte pression pour assurer un bon contact On peut faire appel à la sonification à des fréquences soniques ou ultra-soniques. On peut recourir aussi à d'autres moyens de mise en contact des volailles avec la solution de traitement, tels que tambours rotatifs, par exemple. Les volailles, rincées à l'eau, sont envoyées ensuite dans le bac habituel de réfrigération. La solution de traitement ne contient de préférence que de l'orthophosphate trialcalin. La solution de traitement ne contient pas d'alcool.

De préférence, la solution de traitement ne contient que de l'orthophosphate trialcalin. Pour ajuster le pH on peut y ajouter aussi de faibles quantités d'autres produits, tels que, par exemple, du carbonate de sodium, de l'hydroxyde de sodium et/ou de potassium, du polyphosphate alcalin, tel que le tripolyphosphate de sodium, ou des acides, tel que l'acide phosphorique. Etant donné que les hydroxydes ont un effet défavorable sur les qualités organoleptiques de la viande de volaille, il est préférable d'éviter l'utilisation de tous ces agents basiques ensemble ou de n'utiliser que des quantités qui n'ont aucun effet sur les qualités organoleptiques de la viande de volaille. Si on l'utilise, l'agent basique ne sera mis en oeuvre avec l'orthophosphate alcalin qu'en quantité insuffisante pour provoquer une altération organoleptique de la viande de volaille. Par "faibles quantités" on entend des quantités inférieures à 50 % du poids sec combiné d'orthophosphate trialcalin et d'agent basique pouvant aller habituellement jusqu'à 45 %, et dans tous les cas une quantité insuffisante pour provoquer une altération organoleptique.

Les éléments que contient la solution de traitement sont ajoutés en quantités suffisantes pour assurer un pH supérieur à environ 11,5 et, de préférence, compris entre environ 11,6 et environ 13,0. Le pH assure que la solution de traitement élimine, réduit ou retarde la contamination ou le développement bactériens. On préfère utiliser un appareillage permettant de recycler la solution pour l'économiser, de filtrer les matières solides de la solution recyclée pour en assurer la propreté, d'ajuster la quantité d'eau pour maintenir le volume de la solution et d'ajouter de l'orthophosphate trialcalin pour maintenir la saturation ou la presque saturation de la solution. Bien qu'une solution saturée garantisse une concentration maximum de phosphate, nous avons trouvé qu'il est souhaitable de mettre en oeuvre des concentrations comprises entre environ 4 % et la saturation et, plus particulièrement, entre environ 8 % et la presque saturation. Aux températures plus froides, inférieures à 27 °C et à 10°C, une solution contenant entre environ 4 % et environ 12 % d'orthophosphate trialcalin et, plus particulièrement, environ 6 % ou plus et, plus particulièrement encore, environ 8 % ou plus est efficace pour réduire, éliminer ou retarder la contamination et/ou le développement de toutes les bactéries. A toutes les teneurs en orthophosphate trialcalin de l'ordre de 4 % ou plus, le pH restera supérieur à environ 11,5 et sera compris de préférence entre 11, 6 et environ 13, 5, plus particulièrement entre 12,0 et 13,5.

Les carcasses de volailles sont mises en contact avec la solution de traitement pendant une durée suffisante pour assurer une réduction de la totalité de la contamination bactérienne aérobie supérieure à celle que l'on peut obtenir avec de l'eau pure à des températures comprises entre environ 20°C et 60°C et, de préférence, entre environ 24°C et environ 40°C. Le temps de séjour est suffisant également, dans les conditions du traitement, pour permettre le contact de toutes les surfaces des carcasses exposées à la solution et pouvant être mises au contact de la solution, effectuer un lavage de ces surfaces et, par conséquent, mettre dans une large mesure toutes les colonies formant des unités à la surface des volailles en contact avec la solution. Le temps de contact est suffisant pour permettre, après le séchage, le dépôt d'une couche régulière d'orthophosphate trialcalin sur les surfaces exposées des volailles pour prévenir ou retarder tout développement bactérien ultérieur.

On a trouvé que, à la pression atmosphérique, dans un bac d'immersion, les temps de séjour de quelques secondes, deux ou plus, après le bac d'ébouillantage, jusqu'à environ 30 secondes à environ 30 minutes, là où les conditions de traitement le permettent, sont efficaces. On peut allonger les temps de séjour si la solution n'est pas suffisamment concentrée.

La pulvérisation sous pression est particulièrement indiquée si l'on peut traiter l'intérieur et l'extérieur des volailles éviscérées. On utilise une buse rotative pour pulvériser l'intérieur et on l'introduit entièrement dans la cavité provoquée par l'éviscération de façon à ce que toutes les parties de la viande exposées, tissus et os, soient mises en contact avec la pulvérisation de la solution de traitement Les pulvérisations extérieures sont conçues pour couvrir toute la surface extérieure de la volaille. Lorsque le traitement est mis en oeuvre après le découpage en morceaux des volailles, on utilise un système de pulvérisation qui couvre toute la surface.

La solution est propulsée sous une pression comprise entre 140 et 1050 KPa à travers des buses conçues pour laver énergiquement la surface sans endommager la viande.

Lorsque l'on utilise des bacs ou cuves d'immersion, les volailles sont généralement entraînées dans la solution par un système de chaînes. Bien que ce procédé qui permet à toute la surface des volailles d'être mise en contact avec la solution de traitement à base de phosphate d'entrer, soit approprié, on améliore le contact entre les volailles et la solution en agitant la solution contenue dans ces bacs et on réduit ainsi normalement le temps de contact nécessaire pour obtenir de bons résultats.

Bien qu'il soit possible de traiter les volailles en tout point de la chaîne de traitement avant la réfrigération, à n'importe quelle température et pendant une durée quelconque n'endommageant pas le produit, on a identifié plusieurs zones où l'on pense que le traitement est le plus efficace. Il est possible et souvent souhaitable de procéder à un ou plusieurs traitements à l'orthophosphate trialcalin durant la préparation. Il est possible de procéder au traitement à toute température comprise entre 0 et 70°C pendant des durées allant de quelques secondes à plusieurs heures selon la température.

Nous préférerions traiter l'éviscération où l'on peut pulvériser à fond à la fois l'intérieur et l'extérieur des volailles avec une solution à une température comprise entre 20 et 40°C, de préférence, entre 25 et 35°c. On obtient des résultats particulièrement bons en appliquant tout d'abord une solution de traitement sur toutes les parties de la carcasse des volailles, en la laissant jusqu'à une minute sur la carcasse et en la rinçant ensuite à l'eau pendant tout au plus une autre minute. Ensuite, on réfrigère les carcasses.

Bien que la présente invention soit orientée, dans un premier temps, vers la réduction de la contamination des volailles par les Salmonella, elle est destinée également à indure tout développement bactérien aérobie affecté par les orthophosphates trialcalins décrits. En plus des Salmonella, d'autres bactéries, mesurées par le nombre total de bactéries, subissent une réduction significative. Le nombre total des bactéries aérobies étant fortement réduit, la durée de conservation des volailles peut être prolongée d'une durée comprise environ entre un et quinze jours.

Les espèces de bactéries affectées peuvent être facilement déterminées par l'homme du métier de telle sorte que toutes les bactéries affectées sont considérées comme faisant partie intégrante de la présente invention.

L'exemple suivant constitue une illustration de la présente invention.

### EXEMPLE

On soumet des dindes éviscérées et plumées à l'un de trois traitements en vue de déterminer l'effet que lesdits traitements ont sur la réduction des bactéries aérobies et, par conséquent, sur la durée de conservation des dindes. Les conditions du traitement sont les suivantes :
[A] - Aucun traitement (exemple comparatif)
[C] - Les dindes sont plongées pendant 15-30 secondes dans une solution de traitement ayant une concentration de 10 % en orthophosphate trisodique (AVGARD® brand TSP, Rhône-Poulenc lnc.) à une température de 24°C (exemple comparatif)
[C']- 20 secondes après le contact avec l'orthophosphate trisodique conformément au traitement C, les dindes sont rincées à l'eau pendant environ 10 secondes (selon l'invention).

Toutes ces conditions de traitement interviennent avant que les dindes ne soient réfrigérées. On procède à l'analyse microbiologique d'échantillons de chacune des dindes portant sur les types suivants de bactéries : nombre de bactéries aérobies, enterobacteroceae, E. coli et Salmonella.

Les tests sont effectués pendant deux jours consécutifs. Les résultats des tests du premier jour figurent dans le Tableaux 1, 2 et 3 ; les résultats des tests du deuxième jour sont donnés dans les Tableaux 4, 5 et 6.

Dans les tableaux:
- NBA signifie le nombre de bactéries aérobies
- VRBA signifie "Violet Red Bile Auger" (pigment violet rouge)
- E. C. signifie E. coli
- MUG signifie Methylumbelliferyl-beta-delta-glucoronide
- ENTER. signifie Eterobacteroceae

**TABLEAU 1**

| ECHANTILLON A | NBA Colonies/g | ENTER.Col./g | E. coli Col./g | | SALMONELLA |
|---|---|---|---|---|---|
| | | | VRBA+MUG Présumé | E.C.+MUG Confirmé | |
| 1 | 1000 | 40 | 30 | 30 | POSITIF |
| 2 | 32 000 | 1 040 | 800 | 800 | POSITIF |
| 3 | 9 000 | 130 | 80 | 80 | POSITIF |
| 4 | 6 000 | 90 | 10 | <10 | Négatif |
| 5 | 13 000 | 190 | 90 | 90 | Négatif |
| 6 | 10 000 | 680 | 520 | 520 | POSITIF |
| 7 | 9 000 | 100 | 30 | 30 | Négatif |
| 8 | 18 000 | 110 | 30 | 30 | Négatif |
| 9 | 11 000 | 720 | 360 | 360 | Négatif |
| 10 | 9 000 | 80 | 70 | <10 | Négatif |
| 11 | 24 000 | 100 | 90 | 30 | Négatif |
| 12 | 12 000 | 160 | 190 | 190 | Négatif |
| 13 | 8 000 | 60 | 50 | 50 | Négatif |
| 14 | 9 000 | 190 | 170 | 170 | Négatif |
| 15 | 6 000 | 150 | 90 | 60 | Négatif |
| 16 | 16 000 | 50 | 20 | 20 | Négatif |
| 17 | <1 000 | 100 | 20 | <10 | Négatif |
| 18 | 6 000 | 140 | 130 | 130 | Négatif |
| 19 | 2 000 | 50 | 50 | 50 | Négatif |
| 20 | 20 000 | 440 | 720 | 720 | Négatif |
| 21 | 11 000 | 300 | 90 | 90 | Négatif |
| 22 | 22 000 | 120 | 110 | 110 | Négatif |
| 23 | 9 000 | 100 | 80 | 40 | Négatif |
| 24 | 2 000 | 50 | 40 | 40 | Négatif |
| 25 | 12 000 | 170 | 120 | 120 | Négatif |
| 26 | 16 000 | 180 | 130 | 130 | POSITIF |
| 27 | 15 000 | 440 | 30 | 40 | Négatif |
| 28 | 22 000 | 120 | 190 | 190 | Négatif |
| 29 | 10 000 | 320 | 180 | 180 | Négatif |
| 30 | 10 000 | 160 | 150 | 50 | Négatif |
| | | | | | |

**TABLEAU 2**

| ECHANTILLON C | NBA Col./g | ENTER. Col./g | E.coli Col./g | | SALMONELLA |
|---|---|---|---|---|---|
| | | | VRBA+MUG Présumé | E.C.+MUG Confirmé | |
| 1 | 2 000 | <10 | <10 | - | Négatif |
| 2 | 2 400 | <10 | <10 | - | Négatif |
| 3 | 700 | <10 | <10 | - | Négatif |
| 4 | 2 400 | <10 | <10 | - | Négatif |
| 5 | 700 | <10 | <10 | - | Négatif |
| 6 | 500 | <10 | <10 | - | Négatif |
| 7 | 800 | <10 | <10 | - | Négatif |
| 8 | 3 000 | <10 | <10 | - | Négatif |
| 9 | 1 100 | <10 | <10 | - | Négatif |
| 10 | 300 | <10 | <10 | - | Négatif |
| 11 | 2 600 | <10 | <10 | - | Négatif |
| 12 | 6 000 | <10 | <10 | - | Négatif |
| 13 | 3 200 | <10 | <10 | - | Négatif |
| 14 | 1 300 | <10 | <10 | - | Négatif |
| 15 | 6 400 | <10 | <10 | - | Négatif |
| | | | | | |

**TABLEAU 3**

| ECHANTILLON C' | NBA Col./g | ENTER. Col./g | E. coli Col./g | | SALMONELLA |
|---|---|---|---|---|---|
| | | | VRBA+MUG Présumé | E.C.+MUG Confirmé | |
| 1 | <100 | <10 | <10 | - | Négatif |
| 2 | 400 | <10 | <10 | - | Négatif |
| 3 | <100 | <10 | <10 | - | Négatif |
| 4 | <100 | <10 | <10 | - | Négatif |
| 5 | <100 | <10 | <10 | - | Négatif |
| 6 | 600 | <10 | <10 | - | Négatif |
| 7 | 1 300 | <10 | <10 | - | Négatif |
| 8 | <100 | <10 | <10 | - | Négatif |
| 9 | <100 | <10 | <10 | - | Négatif |
| 10 | 200 | <10 | <10 | - | Négatif |
| 11 | 300 | <10 | <10 | - | Négatif |
| 12 | <100 | <10 | <10 | - | Négatif |
| 13 | <100 | <10 | <10 | - | Négatif |
| 14 | 2 700 | <10 | <10 | - | Négatif |
| 15 | 5 400 | <10 | <10 | - | Négatif |
| | | | | | |

**TABLEAU 4**

| ECHANTILLON A | NBA Col./g | ENTER. Col./g | E. coli Col./g | | SALMONELLA |
|---|---|---|---|---|---|
| | | | VRBA+MUG Présumé | E.C.+MUG Confirmé | |
| 31 | 4 000 | 280 | 140 | 140 | POSITIF |
| 32 | 4 000 | 130 | 70 | 70 | POSITIF |
| 33 | 5 000 | 360 | 220 | 220 | Négatif |
| 34 | 10 000 | 100 | 50 | 50 | POSITIF |
| 35 | 11 000 | 110 | 150 | 150 | Négatif |
| 36 | 26 000 | 520 | 440 | 440 | POSITIF |
| 37 | 5 000 | 240 | 240 | 240 | POSITIF |
| 38 | 11 000 | 1 160 | 520 | 520 | Négatif |
| 39 | 9 000 | 2 480 | 1 520 | 1 520 | Négatif |
| 40 | 2 000 | 220 | 100 | 50 | Négatif |
| 41 | 12 000 | 170 | 260 | 260 | Négatif |
| 42 | 10 000 | 230 | 110 | 50 | Négatif |
| 43 | 36 000 | 1 720 | 1 280 | 1 280 | Négatif |
| 44 | 13 000 | 360 | 170 | 170 | Négatif |
| 45 | 9 000 | 250 | 160 | 50 | Négatif |
| 46 | 8 000 | 1 400 | 640 | 640 | Négatif |
| 47 | 21 000 | 960 | 80 | 80 | POSITIF |
| 48 | 14 000 | 500 | 680 | 680 | Négatif |
| 49 | 15 000 | 920 | 960 | 960 | Négatif |
| 50 | 34 000 | 350 | 150 | 100 | Négatif |
| 51 | 8 000 | 100 | 90 | 30 | Négatif |
| 52 | 76 000 | 360 | 230 | 230 | Négatif |
| 53 | 15 000 | 160 | 120 | 120 | Négatif |
| 54 | 11 000 | 50 | 60 | <10 | Négatif |
| 55 | 64 000 | 1 420 | 1 040 | 1 040 | Négatif |
| 56 | 116 000 | 920 | 500 | 250 | Négatif |
| 57 | 26 000 | 280 | 260 | 160 | Négatif |
| 58 | 4 000 | 360 | 320 | 320 | Négatif |
| 59 | 18 000 | 320 | 160 | 160 | Négatif |
| 60 | 6 000 | 280 | 220 | 220 | Négatif |
| | | | | | |

**TABLEAU 5**

| Echantillon C | NBA Col./g | ENTER. Col./g | E-coli Col./g | | SALMONELLA |
|---|---|---|---|---|---|
| | | | VRBA+MUG Présumé | E.C.+MUG Confirmé | |
| 16 | 600 | <10 | <10 | 6 | Négatif |
| 17 | 1 800 | <10 | <10 | - | Négatif |
| 18 | 1 600 | <10 | <10 | - | Négatif |
| 19 | 5 400 | <10 | <10 | - | Négatif |
| 20 | 1 200 | <10 | <10 | - | Négatif |
| 21 | 2 800 | <10 | <10 | - | Négatif |
| 22 | 3 200 | <10 | <10 | - | POSITIF |
| 23 | 300 | <10 | <10 | - | Négatif |
| 24 | 2 400 | 10 | <10 | - | Négatif |
| 25 | 11 200 | <10 | <10 | - | Négatif |
| 26 | 2 800 | <10 | <10 | - | Négatif |
| 27 | 4 800 | <10 | <10 | - | Négatif |
| 28 | <100 | <10 | <10 | - | Négatif |
| 29 | 11 200 | <10 | <10 | - | Négatif |
| 30 | 3 200 | <10 | <10 | - | Négatif |
| | | | | | |

**TABLEAU 6**

| Echantillon C' | NBA Col./g | ENTER. Col./g | E.coli Col./g | | SALMONELLA |
|---|---|---|---|---|---|
| | | | VRBA+MUG Présumé | E.C.+MUG Confirmé | |
| 16 | 1 400 | <10 | <10 | - | Négatif |
| 17 | 2 200 | <10 | <10 | - | Négatif |
| 18 | 900 | <10 | <10 | - | Négatif |
| 19 | 500 | <10 | <10 | - | Négatif |
| 20 | <100 | <10 | <10 | - | Négatif |
| 21 | 1 400 | <10 | <10 | - | Négatif |
| 22 | <100 | <10 | <10 | - | Négatif |
| 23 | 800 | <10 | <10 | - | Négatif |
| 24 | 2 500 | <10 | <10 | - | Négatif |
| 25 | <100 | <10 | <10 | - | Négatif |
| 26 | 2 800 | <10 | <10 | - | Négatif |
| 27 | <100 | <10 | <10 | - | Négatif |
| 28 | 1 800 | <10 | <10 | - | Négatif |
| 29 | 500 | <10 | <10 | - | Négatif |
| 30 | 2 400 | <10 | <10 | - | Négatif |
| | | | | | |

Les résultats du Traitement A pour le premier jour sont caractéristiques et font apparaître un taux d'incidence de 17 % (5/30) pour les Salmonella. En revanche, les échantillons [C] qui ont été traités sont tous négatifs en ce qui concerne les Salmonella, les E. coli et les Enterobacteriaceae. De plus, ces échantillons présentent une diminution du nombre de bactéries aérobies d'un ordre de grandeur de log 1. Les échantillons [C'] (égouttés/rincés) présentent la même incidence négative en ce qui concerne les Salmonella, E. coli et les Enterobacteriaceae. On observe que le rinçage effectué après le traitement réduit également le nombre de bactéries aérobies à tel point que le taux d'incidence au niveau de la détection concernant les échantillons évalués dans ce groupe est réduit à 47 % (8/15). Cette diminution de l'ordre de grandeur concernant le nombre de bactéries aérobies met encore en évidence l'effet du modèle égouttage-rinçage avant réfrigération. Cette diminution peut se traduire par une augmentation de la durée de conservation comprise entre environ un jour et environ quinze jours.

De même, le deuxième jour, les échantillons [A] présentent un taux d'incidence concernant les Salmonella de 20 %, soit 6 sur 30. Les sous-échantillons [C] sont pris, comme la veille, une minute à compter du temps de contact ; après égouttage, ils présentent un cas positif sur 15. Il y a une explication rationnelle à ce cas positif, à savoir la possibilité d'une contamination croisée avec des carcasses non traitées. Cependant, les résultats concernant E. coli et Enterobacteriaceae sont tous négatifs dans ce groupe et le nombre de bactéries aérobies a diminué également.

Enfin, les sous-échantillons [C'] sont tous négatifs en ce qui concerne les Salmonella, E. coli et Enterobacteriaceae avec une diminution analogue en termes négatifs en ce qui concerne nombre de bactéries aérobies, le niveau de détection étant de 100 colonies par gramme. Dans cet exemple, on trouve 4 cas négatifs sur 15, soit une réduction de 26,6 % du nombre de bactéries aérobies. Cela peut se traduire de nouveau par une augmentation de la durée de conservation de un à quinze jours.

Ces résultats démontrent parfaitement l'efficacité optimale du traitement à base d'orthophosphate trisodique, à savoir un système uniquement par immersion avec un rinçage à l'eau après l'immersion afin de réduire jusqu'au niveau le plus plus bas possible l'incidence des germes pathogènes sur les carcasses traitées.

La description détaillée de l'invention ainsi que les modes de réalisation préférentiels mettent en évidence qu'il est possible de procéder à des modifications et variations sans sortir du domaine des revendications ci-après.

## Revendications

1. Utilisation pour augmenter la durée de conservation de carcasses de volailles de 1 à 15 jours d'un procédé de traitement comportant la mise en contact desdites carcasses de volailles avec une solution de traitement contenant 4% ou plus d'orthophosphate trialcalin par rapport au poids de la solution à condition que la solution de traitement ne contienne pas d'alcool, ladite solution de traitement ayant un pH d'au moins 11,5, ledit traitement étant effectué pendant une durée efficace pour réduire le nombre global de bactéries aérobies sans affecter les qualités organoleptiques des volailles, ledit traitement intervenant après l'éviscération et avant la réfrigération et comportant un rinçage à l'eau après ledit traitement à l'orthophosphate trialcalin et avant la réfrigération.

2. Utilisation selon la revendication 1, **caractérisée par le fait que** la quantité dudit phosphate est de 8% ou plus par rapport au poids de la solution.

3. Utilisation selon la revendication 2, **caractérisée par le fait que** ledit orthophosphate est de l'orthophosphate trisodique.

4. Utilisation selon les revendications 1 à 3, **caractérisée par le fait que** le pH est compris entre 12,0 et 13,5.

5. Utilisation selon les revendications 1 à 4, **caractérisée par le fait que** lesdites volailles sont traitées à une température comprise entre 0°C et 70°C.

6. Utilisation selon la revendication 5, **caractérisée par le fait que** lesdites volailles sont traitées à une température comprise entre 20°C et 45°C.

7. Utilisation selon les revendications 1 à 6, **caractérisée par le fait que** lesdites volailles sont traitées par un procédé d'immersion ou de pulvérisation pendant une durée comprise entre une seconde et deux heures.

8. Utilisation selon les revendications 1 à 7 de traitement de carcasses de volailles comprenant la mise en contact de la surface des volailles, avant réfrigération, avec une solution de traitement aqueuse contenant, pour l'essentiel, 4% ou plus d'orthophosphate alcalin par rapport au poids de la solution, ladite solution de traitement ayant un pH compris entre 12,0 et 13,5; ledit traitement étant effectué pendant une durée efficace pour réduire nombre global de bactéries aérobies sans affecter les qualités organoleptiques des volailles et, par conséquent, en augmenter la durée de conservation.

## Patentansprüche

1. Verwendung von einem Behandlungsverfahren zum Erhöhen der Haltbarkeitsdauer von Geflügelschlachtkörpern von 1 bis 15 Tagen, wobei das Behandlungsverfahren das Inkontaktbringen der Geflügelschlachtkörper mit einer Behandlungslösung umfasst, die 4 % oder mehr Trialkaliorthophosphat enthält, bezogen auf das Gewicht der Lösung, unter der Bedingung, dass die Behandlungslösung keinen Alkohol enthält, wobei die Behandlungslösung einen pH von wenigstens 11,5 aufweist, wobei die Behandlung über einen wirksamen Zeitraum ausgeführt wird, um die Gesamtzahl an aeroben Bakterien zu vermindern, ohne die organoleptischen Eigenschaften des Geflügels zu beeinflussen, wobei die Behandlung nach der Ausweidung und vor der Kühlung vorgenommen wird und eine Spülung mit Wasser nach der Behandlung mit Trialkaliorthophosphat und vor der Kühlung umfasst.

2. Verwendung gemäß Anspruch 1, **dadurch gekennzeichnet, dass** die Phosphatmenge 8 % oder mehr, bezogen auf das Gewicht der Lösung, beträgt.

3. Verwendung gemäß Anspruch 2, **dadurch gekennzeichnet, dass** das Orthophosphat Trinatriumorthophosphat ist.

4. Verwendung gemäß den Ansprüchen 1 bis 3, **dadurch gekennzeichnet, dass** der pH zwischen 12,0 und 13,5 liegt.

5. Verwendung gemäß einem der Ansprüche 1 bis 4, **dadurch gekennzeichnet, dass** das Geflügel bei einer Temperatur, die zwischen 0°C und 70°C liegt, behandelt wird.

6. Verwendung gemäß Anspruch 5, **dadurch gekennzeichnet, dass** das Geflügel bei einer Temperatur, die zwischen 20°C und 45°C liegt, behandelt wird.

7. Verwendung gemäß den Ansprüchen 1 bis 6, **dadurch gekennzeichnet, dass** das Geflügel mittels einem Tauchverfahren oder Zerstäubungsverfahren während einer Dauer zwischen 1 Sekunde und 2 Stunden behandelt wird.

8. Verwendung gemäß einem der Ansprüche 1 bis 7 zur Behandlung von Geflügelschlachtkörpern, umfassend das Inkontaktbringen der Oberfläche des Geflügels vor der Kühlung mit einer wässrigen Behandlungslösung, die im wesentlichen 4 % oder mehr Alkaliorthophosphat enthält, bezogen auf das Gewicht der Lösung, wobei die Behandlungslösung einen pH zwischen 12,0 und 13,5 aufweist, wobei die Behandlung über einen wirksamen Zeitraum ausgeführt wird, um die Gesamtzahl an aeroben Bakterien zu vermindern, ohne die organoleptischen Eigenschaften des Geflügels zu beeinflussen, und folglich um die Haltbarkeitsdauer zu erhöhen.

## Claims

1. Use, in order to increase the period of preservation of poultry carcasses from 1 to 15 days, of a treatment process comprising the placing of the said poultry carcasses in contact with a treatment solution containing 4% or more of trialkaline orthophosphate relative to the weight of the solution on condition that the treatment solution does not contain alcohol, the said treatment solution having a pH of at least 11.5, the said treatment being carried out for an effective period in order to reduce the global number of aerobic bacteria without affecting the organoleptic qualities of the poultry, the said treatment taking place after evisceration and before refrigeration and including a rinsing with water after the said treatment with trialkaline orthophosphate and before refrigeration.

2. Use according to claim 1, **characterized by** the fact that the quantity of the said phosphate is 8% or more relative to the weight of the solution.

3. Use according to claim 2, **characterized by** the fact that the said orthophosphate is trisodium orthophosphate.

4. Use according to claims 1 to 3, **characterized by** the fact that the pH is between 12.0 and 13.5.

5. Use according to claims 1 to 4, **characterized by** the fact that the said poultry is treated at a temperature of between 0°C and 70°C.

6. Use according to claim 5, **characterized by** the fact that the said poultry is treated at a temperature of between 20°C and 45°C.

7. Use according to claims 1 to 6, **characterized by** the fact that the said poultry is treated by an immersion or spraying process for a period of between one second and two hours.

8. Use according to claims 1 to 7 for the treatment of poultry carcasses comprising the placing of the surface of the poultry, before refrigeration, in contact with an aqueous treatment solution containing, for the most part, 4% or more of alkaline orthophosphate relative to the weight of the solution, the said treatment solution having a pH of between 12.0 and 13.5; the said treatment being carried out for an effective period in order to reduce the global number of aerobic bacteria without affecting the organoleptic qualities of the poultry, and consequently to increase its period of preservation.
